# EUROPÄISCHE PATENTANMELDUNG

(11) **EP 1 559 965 A1**
(43) Veröffentlichungstag der Anmeldung: **03.08.2005**
(21) Anmeldenummer: 04001812.9
(22) Anmeldetag: 28.01.2004
(51) Int. Cl.: F24H 8/00

(54) **Brennwertkessel mit zweistufigem Wärmetauscher**

(71) Anmelder: Vergara Uranga, Jose Maria, 48111 Laukiniz (Vizcaya) (ES)
(72) Erfinder: Vergara Uranga, Jose Maria, 48111 Laukiniz (Vizcaya) (ES)
(74) Vertreter: Feldkamp, Rainer, Dipl.-Ing.

(57) **Zusammenfassung**

Bei einem Brennwertkessel mit Keramikbrenner und Druckgebläse ist die Wärmetauscher-Vorrichtung durch zwei Stufen gebildet, die bezogen auf die nach unten gerichtete Strömung der Verbrennungsgase ein Hochtemperatur-Wärmetauscher-Modul (5), das aus Kupfer hergestellt und näher an dem Ursprung der Verbrennungsgase angeordnet ist, und ein Niedertemperatur-Wärmetauscher- oder Kondensations-Modul (6) umfassen, das weiter entfernt von dem Ursprung der Verbrennungsgase angeordnet ist, ebenfalls aus Kupfer hergestellt ist, und eine Korrosionsschutz-Oberflächenbehandlung aufweist. Das Hochtemperatur-Wärmetauscher-Modul (5) empfängt die Verbrennungsgase (4) mit einer Temperatur von etwa 700°C und gibt diese mit einer Temperatur die über der Kondensationstemperatur von Wasser (etwa 150°C bis 200°C) liegt an das Kondensations-Modul (6) als, die dieses unter Abkühlung bis zu einer Temperatur von ungefähr 60°C verlassen kaltes Wasser strömt zuerst durch das Kondensations-Modul (6) und gelangt von dort zum Hochtemperatur-Wärmetauscher-Modul (5) aus dem das Wasser mit der Betriebstemperatur austritt.

## Beschreibung

Die Erfindung bezieht sich auf einen Heizkörper für einen Brennwertkessel der im Oberbegriff des Anspruchs 1 genannten Art.

Die Erfindung bezieht sich insbesondere auf einen Brennwertkessel, wie er bei Heiz- und Warmwasserversorgungsinstallationen verwendet wird, die einen im oberen Bereich der Brennkammer des Kessels angeordneten Keramikbrenner sowie ein Gebläse verwenden, das eine nach unten hin gerichtete Strömung der Verbrennungsgase hervorruft, die auf ihrer Bahn ihre Wärme über eine Wärmetauscher-Vorrichtung abgeben, deren Inneres von dem zu erwärmenden Wasser durchströmt ist.

Die Erfindung bezieht sich weiterhin insbesondere auf eine spezielle Konstruktion der Wärmetauscher-Vorrichtung, die einen verbesserten Wirkungsgrad bei gleichzeitiger Verringerung der Abmessungen, des Gewichtes und der Herstellungskosten ergibt.

Das Konzept der Brennwerttechnik ist als solches bekannt und beruht darauf, die latente Kondensationswärme des Wassers auszunutzen, die beim Ausfällen von Wasser in flüssiger Phase aus den Verbrennungsgasen frei wird, wenn die Temperatur der Verbrennungsgase unter den Kondensationspunkt absinkt.

Diese Brennwertkessel stellen eine Alternative zu üblichen Heizkesseln dar, weil sie das Erreichen eines Nutzungsgrades von 130% (bezogen auf den eingesetzten Brennstoff) ermöglichen, verglichen mit einem Nutzungsgrad von 90%, der bei den herkömmlichen Heizkesseln erreicht werden, bei denen lediglich die eigentliche Verbrennungswärme ausgenutzt wird, wobei im letzteren Fall zur Vermeidung einer Kondensation des in den Verbrennungsgasen erzeugten Wassers diese Verbrennungsgase den Heizkessel mit Temperaturen von ungefähr 100°C verlassen, das heißt mit einer wesentlich größeren Restwärmemenge, die nicht zum angestrebten Zweck der Erwärmung des Brauchwassers ausgenutzt wird.

Der Grund dafür, dass diese Wärmemenge bei den üblichen Heizkesseln nicht ausgenutzt wird, und gleichzeitig ein großes Problem der heutigen Brennwertkessel oder Kessel mit Kondensation, besteht in der Korrosion, die bei der Kondensation des Wassers der Verbrennungsgase entsteht, die in Kombination mit den in diesen Verbrennungsgasen enthaltenen Schwefel- und Stickstoffoxiden zu der Erzeugung von Schwefelsäure und Stickstoffsäure führt, die sehr stark korrodierend wirken.

Die starke Korrosionswirkung von Schwefelsäure führt dazu, dass Kupfer nicht für der Konstruktion des Wärmetauschers verwendet werden kann, obwohl Kupfer eigentlich aufgrund seiner hohen thermischen Leitfähigkeit das geeignete Material für diesem Zweck ist.

Aus diesem Grund wird bei bekannten Brennwertkesseln der Wärmetauscher aus Edelstahl oder mit großen Wandstärken aus einer Legierung von Aluminium und Silizium hergestellt. In jedem Fall ist die thermische Leitfähigkeit wesentlich kleiner als die von Kupfer (in der Größenordnung eines Fünftels bzw. der Hälfte) was es erforderlich macht, die Größe des Wärmetauschers auf wirklich außerordentliche Abmessungen zu vergrößern, um Ergebnisse zu erzielen, die mit einem Wärmetauscher vergleichbar sind, der aus Kupfer hergestellt ist. Diese Überdimensionierung führt zu einer sehr starken Vergrößerung des Gewichtes und der Kosten sowie zu Schwierigkeiten aufgrund des Raumbedarfs bei der Installation. Im Fall der Verwendung einer Legierung aus Aluminium und Silizium behilft man sich mit großen Wandstärken, damit diese der Korrosion durch die Schwefelsäure während einer ausreichend langen Zeit standhalten kann.

Aus Umweltschutzgründen sind Brennwertkessel gegenüber üblichen Heizkesseln vorzuziehen, obwohl sie einen säurehaltigen Restausfluss aufweisen, weils sie andererseits die Atmosphäre nicht mit Schwefeloxiden und Kohlenstoffoxiden belasten, die zu saurem Regen führen. Der flüssige saure Rückstand kann in Reinigungsvorrichtungen behandelt werden.

Der Erfindung liegt die Aufgabe zu Grunde, einen Heizkörper für einen Brennwertkessel der eingangs genannten Art zu schaffen, der eine neuartige Konzeption der Wärmetauscher-Vorrichtung aufweist, bei der die vorstehend genannten Probleme vermieden werden, und der wesentlich verringerte Abmessungen, ein verringertes Gewicht und verringerte Herstellungskosten aufweist.

Diese Aufgabe wird durch die im Patentanspruch 1 angegebenen Merkmale gelöst.

Vorteilhafte Ausgestaltungen und Weiterbildungen der Erfindung ergeben sich aus den Unteransprüchen.

Die vorliegende Erfindung ergibt einen Brennwertkessel, bei dem die Wärmetauscher-Vorrichtung in zwei Stufen gebildet sind, die bezogen auf die nach unten gerichteten Strömung der Verbrennungsgase durch ein Hochtemperatur-Wärmetauscher-Modul, das aus Kupfer hergestellt ist und am nächsten an dem Ursprung der Verbrennungsgase angeordnet ist, und ein Niedertemperatur-Wärmetauscher-Modul oder Kondensations-Modul umfassen, das am weitesten von dem Ursprung der Verbrennungsgase entfernt ist und das eine Korrosionsschutz-Oberflächenbehandlung aufweist, wobei das Hochtemperatur-Wärmetauscher-Modul die Verbrennungsgase mit einer Temperatur von ungefähr 700°C empfängt und diese mit einer Temperatur abgibt, die wesentlich höher als die Kondensationstemperatur des Wassers ist und zwischen 150°C und 200°C liegt, worauf die Verbrennungsgase dann mit einer Temperatur von weniger als 200°C das Kondensations-Modul durchqueren und aus diesem unter Abkühlung auf eine Temperatur von ungefähr 60°C austreten, was in jedem Fall unter der Kondensationstemperatur des Wassers liegt, wobei das Kondensations-Modul das kalte Wasser empfängt, das in entgegengesetzter Richtung zu den Verbrennungsgasen strömt, das Kondensations-Modul durchquert und zu dem Hochtemperatur-Wärmetauscher-Modul gelangt, den es mit der erforderlichen Betriebstemperatur verlässt.

Diese erfindungsgemäße Konstruktion ermöglicht die Erzielung einer hohen Nutzung der Kondensationswärme, ohne dass die Nachteile der Größe, des Gewichtes, der Kosten und der Schwierigkeit der Unterbringung hervorgerufen werden, an denen die heutigen bekannten Konstruktionen leiden.

Tatsächlich ergibt sich aufgrund der Aufteilung des Kühlprozesses der Verbrennungsgase auf zwei Stufen die Ausnutzung der großen Wärmeleitfähigkeit von Kupfer zur Konstruktion eines Hochtemperatur-Wärmetauschers, der den Korrosionsproblemen nicht ausgesetzt ist, weil die Austrittstemperatur dieses Wärmetauschers mehr als etwas über dem Kondensationspunkt liegt, und andererseits die Ausnutzung der latente Kondensationswärme in einer Stufe, die speziell als Kondensations-Modul ausgelegt ist und die im Bereich von Temperaturen des Zustandswechsels (Kondensation des Wassers) arbeitet, das heißt, wenn die Verbrennungsgase den größten Teil ihrer Wärme bereits abgegeben haben (in einer Weise, die mit einem üblichen Heizkessel vergleichbar ist).

Für einen gleichen Bereich von Temperaturen (Anfangs- und Endtemperaturen) der Verbrennungsgase und der zu erwärmenden Wassermenge hat sich erwiesen, dass der Heizkörper eines Brennwertkessels gemäß der Erfindung ein Gewicht zwischen einem und zwei Zehnteln und Kosten zwischen einem Drittel und der Hälfte im Vergleich zu den bekannten Brennwertkesseln hat.

Andererseits ist auch das Volumen der Vorrichtung entsprechend verringert, weil dies in direkter Beziehung zu den Abmessungen der Wärmetauscher-Vorrichtung steht, was erheblich die Unterbringungsmöglichkeiten bei der Installation verbessert.

Vom Umweltschutzgesichtspunkt erfüllt die erfindungsgemäße Lösung die Ziele in der gleichen Weise wie bekannte Brennwertkessel, das heißt es wird ein flüssiger saurer Rückstand erzeugt, der Reinigungsvorrichtungen zugeführt wird, während an die Atmosphäre Gase abgegeben werden, die von Schwefeloxiden, Stickoxiden und Kohlenstoffoxiden gereinigt sind.

### Zeichnungen und Bezugsziffern

Zum besseren Verständnis der Eigenart der vorliegenden Erfindung ist in den beigefügten Zeichnungen eine bevorzugte gewerbliche Ausführungsform dargestellt, die lediglich ein Beispiel und keine Beschränkung darstellt.

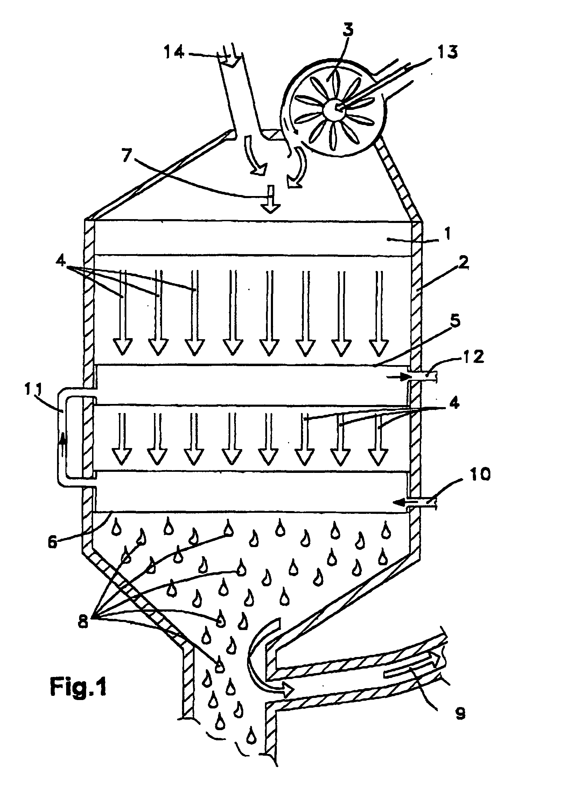

Die Figur 1 ist eine Schnittansicht, die schematisch den Aufbau eines Brennwertkessels gemäß der Erfindung zeigt.

In dieser Zeichnung sind die folgenden Bezugsziffern angegeben:
- 1.-: Keramikbrenner
- 2.-: Brennkammer
- 3.-: Druckgebläse
- 4.-: Verbrennungsgehäuse
- 5.-: Hochtemperatur-Wärmetauscher-Modul
- 6.-: Niedertemperatur-Wärmetauscher-Modul oder Kondensations-Modul
- 7.-: Brennstoffgemisch
- 8.-: Flüssiger saurer Rückstand
- 9.-: Restgase
- 10.-: Kaltwasser-Einlass
- 11.-: Verbindungsleitung zwischen den Modulen (5) und (6)
- 12.-: Warmwasser-Auslass
- 13.-: Lufteinlass
- 14.-: Gaseinlass

### Erläuterung einer bevorzugten Ausführungsform

Bezüglich der bereits angegebenen Figur und der Bezugsziffem ist in der Zeichnung eine bevorzugte Ausführungsform für einen Brennwertkessel gezeigt, wie er bei Geräten und Installationen zur Wassererwärmung verwendet wird, wobei ein Keramikbrenner (1), der im oberen Bereich der Brennkammer (2) des Kessels angeordnet ist, und ein Druckgebläse (3) verwendet wird, das Luft (13) einleitet, die zusammen mit dem Gas (14) die Brennstoffmischung (7) bildet, wobei das Druckgebläse eine abwärts gerichtete Zirkulation der Verbrennungsgase (4) erzwingt, die auf ihrer Bewegungsbahn ihre Wärme über eine Wärmetauscher-vorrichtung abgeben, die in ihrem Inneren von dem zu erwärmenden Wasser durchströmt wird.

Die erfindungsgemäße Konstruktion ist schematisch in Figur 1 erläutert, in der gezeigt ist, dass die Wärmetauschervorrichtung durch zwei Stufen gebildet ist, die bezogen auf die nach unten gerichtete Strömung der Verbrennungsgase (4) ein Hochtemperatur-Wärmetauscher-Modul (5), das aus Kupfer hergestellt und näher an dem Ursprung der Verbrennungsgase angeordnet ist, und ein Niedertemperatur-Wärmetauscher-Modul oder Kondensations-Modul (6) umfassen, das weiter entfernt von der Quelle der Verbrennungsgase angeordnet ist. Das Niedertemperatur-Wärmetauscher-Modul weist eine Korrosionsschutz-Oberflächenbehandlung auf. Das Hochtemperatur-Wärmetauscher-Modul (5) empfängt die Verbrennungsgase (4) mit einer Temperatur von ungefähr 700°C und gibt diese mit einer Temperatur ab, die wesentlich höher als die Kondensationstemperatur des Wassers ist und die zwischen ungefähr 150°C und 200°C liegt, wobei diese Verbrennungsgase (4) mit weniger als 200°C das Kondensations-Modul (6) erreichen und in diesem bis zu einer Temperatur von ungefähr 60°C und in jedem Fall unter die Kondensationstemperatur des Wassers abgekühlt werden. Dieses Kondensations-Modul (6) empfängt das Kaltwasser, das in entgegengesetzter Richtung zu den Verbrennungsgasen (4) zirkuliert und das Kondensations-Modul (6) durchläuft und zu dem Hochtemperatur-Wärmetauscher-Modul (5) gelangt, in dem es die erforderliche Betriebstemperatur erreicht.

Wie dies in Figur 1 gezeigt ist, erreicht das Brennstoffgemisch (7) den Keramikbrenner (1), der eine vollständige Verbrennung sicherstellt, wodurch Verbrennungsgase (4) erzeugt werden, die durch die Wirkung des Druckgebläses (3) gezwungen werden, in Abwärtsrichtung zu strömen. Diese Verbrennungsgase (4) mit einer Temperatur von 700°C erreichen das Hochtemperatur-Wärmetauscher-Modul (5) und geben Wärme ab, bis ihre Temperatur etwa 150°C erreicht, wobei sie mit dieser Temperatur das Niedertemperatur-Wärmetauscher-Modul oder das Kondensations-Modul (6) durchlaufen. In diesem werden die Verbrennungsgase (4) auf ungefähr 60°C abgekühlt, wodurch die Kondensation des Wasser hervorgerufen wird, das sich mit den gasförmigen Stickstoff- und Kohlenstoff-Oxiden verbindet, um einen flüssigen sauren Rückstand (8) zu bilden, der am unteren Ende aufgefangen und zu Wasserreinigungseinrichtungen geleitet wird, während der Rest der Verbrennungsgase, der von den Oxiden, die für den schädlichen sauren Regen verantwortlich sind, gereinigt ist, an die Atmosphäre abgegeben wird. Gleichzeitig führt das Wasser den Umlauf in entgegengesetzter Richtung aus und tritt in das Kondensations-Modul (6) über den Kaltwasser-Einlass (10) ein, durchläuft dieses Kondensations-Modul (6), in dem es die latente Kondensationswärme aufgrund der Ausfällung des Wassers durch die folgende Abkühlung der Verbrennungsgase (4) empfängt, und dieses Wasser tritt über die Leitung (11) in das Hochtemperatur-Wärmetauscher-Modul (5) ein, in dem es den Rest der Wärme empfängt und für seinen Gebrauch an den Warmwasser-Auslass (12) geleitet wird.

Gemäß einer bevorzugten Ausführungsform der Erfindung sind das Hochtemperatur-Wärmetauscher-Modul (5) und das Kondensations-Modul (6) miteinander vereinigt und bilden eine kompakte austauschbare Einheit.

Gemäß einer weiteren Ausführungsform der Erfindung sind das Hochtemperatur-Wärmetauscher-Modul (5) und das Kondensations-Modul (6) als getrennte miteinander verbindbare Elemente ausgebildet .

## Patentansprüche

1. Heizkörper für einen Brennwertkessel für Heizungs- und Warmwasserinstallationen, der einen Keramikbrenner (1), der am oberen Ende einer Brennkammer (2) des Kessels angeordnet ist, sowie ein Druckgebläse (3) aufweist, das eine nach unten gerichtete Strömung der Verbrennungsgase (4) erzwingt, die auf ihrer Bahn ihre Wärme über eine Wärmetauscher-Vorrichtung abgeben, die in ihrem Inneren von dem zu erwärmende Wasser durchlaufen wird, **dadurch gekennzeichnet, dass** die Wärmetauscher-Vorrichtung durch zwei Stufen gebildet ist, die bezogen auf die nach unten gerichtete Strömung der Verbrennungsgase ein Hochtemperatur-Wärmetauscher-Modul (5), das aus Kupfer hergestellt und näher an dem Ursprung der Verbrennungsgase angeordnet ist, und ein Niedertemperatur-Wärmetauscher- oder Kondensations-Modul (6) umfassen, das ebenfalls aus Kupfer besteht und weiter entfernt von dem Ursprung der Verbrennungsgase angeordnet ist und eine Korrosionsschutz-Oberflächenbe-handlung aufweist, dass das Hochtemperatur-Wärmetauscher-Modul (5) die Verbrennungsgase (4) mit einer Temperatur von etwa 700°C empfängt und diese mit einer Temperatur abgibt, die wesentlich höher als die Kondensationstemperatur von Wasser ist und die zwischen etwa 150°C und 200°C liegt, wobei diese Verbrennungsgase (4) mit weniger als 200°C das Kondensations-Modul (6) durchqueren und dieses unter Abkühlung bis zu einer Temperatur von ungefähr 60°C verlassen, die in jedem Fall unter der Kondensationstemperatur von Wasser liegt, und dass das Kondensations-Modul (6) das kalte Wasser empfängt, das in entgegengesetzter Richtung zu den Verbrennungsgasen (4) strömt, das Konden-sations-Modul (6) durchquert und zu dem Hochtemperatur-Wärmetauscher-Modul (5) gelangt, aus dem das Wasser mit der erforderlichen Betriebstemperatur austritt.

2. Heizkörper für einen Brennwertkessel nach Anspruch 1, **dadurch gekennzeichnet, dass** das Hochtemperatur-Wärmetauscher-Modul (5) und das Kondensations-Modul (6) miteinander vereinigt sind und eine kompakte austauschbare Einheit bilden.

3. Heizkörper für einen Brennwertkessel nach Anspruch 1, **dadurch gekennzeichnet, dass** das Hochtemperatur-Wärmetauscher-Modul (5) und das Kondensations-Modul (6) als getrennte, miteinander verbindbare Einheiten ausgebildet sind.
